# EUROPÄISCHE PATENTSCHRIFT

(11) **EP 1 761 718 B1**
(45) Veröffentlichungstag und Bekanntmachung des Hinweises auf die Patenterteilung: **12.03.2008**
(21) Anmeldenummer: 05756829.7
(22) Anmeldetag: 27.06.2005
(51) Int. Cl.: F16H 3/54, F16H 63/30

(54) **SCHALTBARER HYDROSTATISCHER KOMPAKTANTRIEB**
SHIFTABLE HYDROSTATIC COMPACT DRIVE UNIT
ENTRAINEMENT COMPACT HYDROSTATIQUE COMMUTABLE

(30) Priorität: 26.06.2004 DE 102004031009
(43) Veröffentlichungstag der Anmeldung: 14.03.2007
(73) Patentinhaber: LOHMANN & STOLTERFOHT GMBH, 58455 Witten (DE)
(72) Erfinder: MEISE, Andreas, 44795 Bochum (DE); DAMM, Horst, 45549 Sprockhövel (DE)
(74) Vertreter: Kietzmann, Lutz
(86) Internationale Anmeldenummer: PCT/EP2005/052993
(87) Internationale Veröffentlichungsnummer: WO 2006/000586

(56) Entgegenhaltungen:
- EP-A- 0 341 369
- DE-U1- 9 318 634
- US-A- 2 870 655
- US-A- 4 026 167
- US-A- 5 700 220

## Beschreibung

Die vorliegende Erfindung betrifft einen schaltbaren hydrostatischen Kompaktantrieb, insbesondere für Fahrantriebe und Windenantriebe, mit mindestens einer Planetenstufe, bei der eine erste schaltbare Lamellenkupplung ein Hohlrad drehfest mit einem Gehäuse verbindet und eine zweite schaltbare Lamellenkupplung das Sonnenrad der Planetenstufe mit dem Hohlrad drehfest verbindet, wobei das Sonnenrad dieser Planetenstufe durch einen Hydromotor angetrieben ist, und ein Planetensteg der Planetenstufe als Abtrieb vorgesehen ist.

Vornehmliches Einsatzgebiet eines derartigen Kompaktantriebs sind hydrostatisch angetriebene Fahrzeuge oder Winden. Innerhalb des Kompaktantriebs kommt mindestens eine Planetenstufe zur Untersetzung der Antriebsdrehzahl zur Anwendung, welche sich besonders bauraumsparend innerhalb des Kompaktantriebes integrieren lässt. Weiterhin sorgen in der Regel zwei Lamellenkupplungen für eine Schaltbarkeit, wobei ein erstes Lamellenpaket zusammengepresst wird, um ein Getriebeglied der Planetenstufe mit dem Gehäuse drehsteif zu verbinden, so dass bei freier anderer Lamellenkupplung die Übersetzung der Planetenstufe größer als eins ist. Das andere Lamellenpaket wird dagegen zusammengepresst, um zwei Getriebeglieder der Planetenstufe miteinander zu verbinden, um bei geöffneter erster Lamellenkupplung ohne Wandlung der Drehzahl mit einer Übersetzung von i=1 durchzutreiben. Ferner ist es möglich, durch Öffnen beider Lamellenpakete An- und Abtrieb voneinander zu entkoppeln oder durch Zusammenpressen beider Lamellenpakete das Getriebe gänzlich zu blockieren. In der Regel werden aus sicherheitstechnischen Gründen die Lamellenkupplungen mittels Federspeicher geschlossen und durch hydrostatischen Druck über einen sogenannten Stufenkolben gelüftet.

Aus der EP 0 408 592 B1 geht ein solches schaltbarer hydrostatischer Kompaktantrieb hervor. Auch hier erfolgt die Schaltung eines mit Planetenstufe ausgestatteten Getriebes über zwei Lamellenkupplungen. Bei Getrieben dieser Bauweise ist es erforderlich, die Schließkräfte der zweiten Lamellenkupplung auf das rotierende Lamellenpaket zu übertragen. Dies geschieht hier dadurch, dass der Hydraulikdruck zur Betätigung der Lamellenkupplung über eine Drehdurchführung zu dem mitnehmenden Stufenkolben geführt wird. Hierbei ist jedoch die Drehzahl der Eintriebswelle durch die zulässigen Umfangsgeschwindigkeiten der Rotationsdichtungen der Drehdurchführung beschränkt. Ferner ist bei den Dichtungen aufgrund des Dauerbetriebs mit einer vergleichsweise kurzen Lebensdauer zu rechnen.

Aus der DE 93 18 634 U1 geht ein weiterer gattungsgemäßer Kompaktantrieb hervor. Bei dieser Konstruktion wird die Axialkraft, welche über die Schließkräfte der zweiten Lamellenkupplung erzeugt werden über einen drehfesten Stufenkolben mittels Drucklager an das Lamellenpaket übertragen. Bei der Kraftübertragung mittels Drucklager ist jedoch nachteilig, dass in den Drucklagern unter Last bei hoher Drehzahl eine starke Wärmeentwicklung stattfindet. Ferner stellen Drucklager besondere Ansprüche an die Schmierung. Durch die vorgegebene Tragfähigkeit der Lager bei knappem Bauraum können nur eingeschränkte Kräfte übertragen werden, so dass die Leistungsfähigkeit der Lamellenkupplung nicht ausgenutzt werden kann.

Es ist daher die Aufgabe der vorliegenden Erfindung eine Lösung zur Schaltung eines gattungsgemäßen Getriebes zu finden, welche einerseits eine optimale Getriebelebensdauer gewährleistet und andererseits eine minimale Wärmeentwicklung verursacht.

Die Aufgabe wird ausgehend von einem schaltbaren hydrostatischen Kompaktantrieb gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass ein Lamellenträger vorgesehen ist, der die Innenlamellen der ersten Lamellenkupplung und die Außenlamellen der zweiten Lamellenkupplung sowie einen Federspeicher zum Schließen der zweiten Lamellenkupplung aufnimmt, wobei sich die Axialkraft des Federspeichers bei geschlossener zweiter Lamellenkupplung auf einer Seite an diesem Lamellenträger abstützt und auf der anderen Seite über einen axialbeweglichen Zwischenring, wobei sich das Lamellenpaket wiederum am Lamellenträger abstützt.

Der Vorteil dieser Lösung liegt insbesondere darin begründet, dass mit dem erfindungsgemäßen Lamellenträger ein funktionsintegriertes Bauteil innerhalb des Getriebes zum Einsatz kommt, welches bauraumsparend derart hierin unterbringbar ist, dass eine Reibung und damit verbundene Wärmeentwicklung an der Kontaktstelle zwischen den die Kupplung betätigenden Stufenkolben und dem erforderlichen Zwischenring der zweiten Lamellenkupplung vermieden wird.

Indem die auf die Lamellenkupplung wirkende Federkraft des Federspeichers innerhalb des Getriebegliedes abgestützt wird, das in dem einen Schaltzustand mit dem Gehäuse und dem anderen Schaltzustand mit einem anderen Getriebeglied drehfest verbunden wird, bleiben für den Schaltzustand bei dem zwei Getriebeglieder miteinander verbunden sind die Axialkräfte innerhalb dieses Bauteiles und müssen nicht über Drucklager abgestützt werden.

Vorzugsweise ist der Zwischenring im Bereich der zweiten Lamellenkupplung über eine Gleitlagerung mit einem hydraulisch betätigten Stufenkolben zur Lüftung der Lamellenkupplung gegen die Axialkraft des Federspeichers verbunden. Die einfache Gleitlagerung kann an dieser Stelle deshalb verwendet werden, weil hierüber keine Betätigungskräfte fließen. Im anderen Schaltzustand wird die Lüftkraft des hydrostatischen Stufenkolbens über die Gleitlagerung zum Öffnen des Lamellenpakets übertragen. In diesem Fall bewegt sich das Bauteil nicht, so dass an der Gleitlagerstelle zwar eine Axialkraft anliegt, aber keine Relativbewegung zwischen den Lagerpartnern stattfindet. Alternativ zur Gleitlagerung ist es auch denkbar, an dieser Stelle eine Wälzlagerung einzusetzen, um beispielsweise die Verschleißeigenschaften im Vergleich zur Gleitlagerung weiter zu verbessern.

Weiterhin wird vorgeschlagen, dass der Lamellenträger der zweiten Lamellenkupplung über eine Koppelverzahnung drehfest mit dem Hohlrad verbunden ist. Diese Verbindungslösung ermöglicht eine einfache Montage oder Demontage des besagten Lamellenträgers zugunsten der Reparaturfreundlichkeit, falls die Lamellenkupplung einer Wartung oder Reparatur bedarf.

Gemäß einer weiteren, die Erfindung im Hinblick auf die Reparaturfreundlichkeit verbessernden Maßnahme wird vorgeschlagen, dass das Sonnenrad der Planetenstufe über eine Steckverzahnung direkt mit dem Hydromotor verbunden ist und mit einer weiteren Mitnehmerverzahnung versehen ist, welche direkt mit den Innenlamellen der zweiten Lamellenkupplung zwischen Sonnenrad und Hohlrad verbunden ist. Diese koaxiale Wirkverbindung zur Kraftübertragung trägt daneben auch zur Bauteileinsparung bei.

Vorzugsweise sollten die von außen auf das Getriebe einwirkenden Kräfte mittels einer Kegelrollenlagerung aufgenommen werden. Diese Lagerungsart erscheint im Hinblick auf die zu beherrschenden Kräfte hier optimal. Natürlich ist es auch möglich, alternativ hierzu auf eine Zylinderrollenlagerung, eine Kugellagerung oder dergleichen zurückzugreifen.

Zur Erhöhung des Untersetzungsverhältnisses des Kompaktantriebes wird vorgeschlagen, dass weitere Planetenstufen der ohnehin vorhandene Planetenstufe nachgeschaltet sind. Diese lassen sich im Falle eines Fahrantriebes im Bereich des Nabengehäuses unterbringen. Der Antrieb der weiteren Planetenstufen erfolgt vorzugsweise über deren Sonnenwellen.

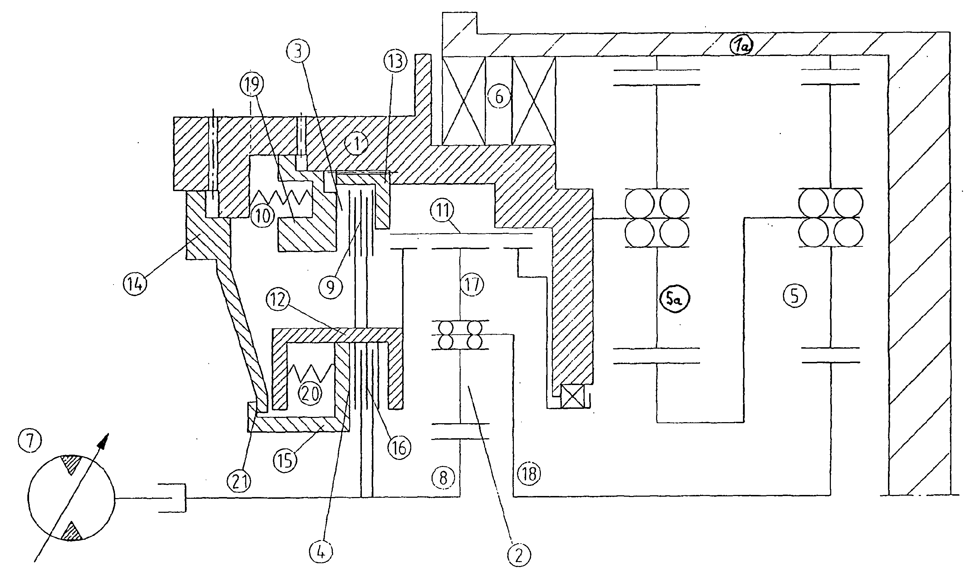

Weitere, die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt einen schematischen Schaltplan eines hydrostatischen Kompaktantriebs als Fahrantrieb.

Der schaltbare hydrostatische Kompaktantrieb ist umgeben von einem Gehäuse 1, das eine Planetenstufe 2, eine erste schaltbare Lamellenkupplung 3 sowie eine zweite schaltbare Lamellenkupplung 4 beherbergt. Über eine Kegelrollenlagerung 6 ist an dem Gehäuse 1 ein Nabengehäuse 1a drehbar angebracht, welches als Abtrieb - hier zur Aufnahme eines Fahrzeugrades - dient. Die erste schaltbare Lamellenkupplung 3 verbindet ein Hohlrad 11 der Planetenstufe 2 drehfest mit dem Gehäuse 1. Über die zweite schaltbare Lamellenkupplung 4 ist das Sonnenrad 8 der Planetenstufe 2 mit einem Hohlrad 11 der zweiten Planetenstufe drehfest verbindbar. Das Sonnenrad 8 der Planetenstufe 2 wird durch einen Hydromotor 7 angetrieben. Ein Planetensteg 18 der Planetenstufe 2 dient dagegen als Abtrieb und ist zu diesem Zwecke mit dem Sonnenrad einer nachgeschalteten Planetenstufe 5 verbunden. Dieser Planetenstufe 5 ist wiederum eine weitere Planetenstufe 5a zur weiteren Untersetzung nachgeschaltet. Die Hohlräder beider nachgeschalteter Planetenstufen 5 und 5a sind ortfest mit dem Nabengehäuse 1a ausgebildet.

Die Lamellenkupplung 4 besitzt einen Lamellenträger 12 für die Innenlamellen, der als funktionsintegriertes Bauteil auch die Außenlamellen der Lamellenkupplung 3 aufnimmt sowie darüber hinaus auch einen Federspeicher 20 zum Schließen der zweiten Lamellenkupplung 4. Die mit den besagten Außenlamellen korrespondierenden Innenlamellen der zweiten Lamellenkupplung 4 sind über eine - hier nicht im Detail dargestellte - Mitnehmerverzahnung direkt mit dem Sonnerad 8 der Planetenstufe 2 verbunden. Das Sonnenrad 8 der Planetenstufe 2 weist des weiteren eine - ebenfalls nicht im Detail dargestellte - Steckverzahnung zum Ankoppeln des Hydromotors 7 als Antriebseinheit auf.

Seitens der ersten schaltbaren Lamellenkupplung 3 erfolgt die drehfeste Verbindung des Lamellenträgers 13 für die Außenlamellen mit dem Hohlrad 11 über eine Koppelverzahnung.

Beide Lamellenkupplungen 3 und 4 sind über jeweils zugeordnete Federspeicher 10 beziehungsweise 20 schließbar, wogegen das Lüften beider Lamellenkupplungen 3 und 4 - in an sich bekannter Weise - hydraulisch über entsprechende Kolben-ZylinderAnordnungen erfolgt. Seitens der ersten Lamellenkupplung 3 dient hierfür ein Stufenkolben 19; seitens der zweiten Lamellenkupplung 4 ist hierfür ein zugeordneter Stufenkolben 14 vorgesehen. Die Wirkverbindung zwischen dem Stufenkolben 14 und dem Lamellenpaket der zweiten Lamellenkupplung 4 wird über einen Zwischenring 15 durch eine Gleitlagerung zwischen Stufenkolben 14 und Zwischenring 15 hergestellt. Die Axialkraft des Federspeichers 20 der zweiten Lamellenkupplung stützt sich in der Schließstellung auf einer Seite an dem Lamellenträger 12 ab und auf der anderen Seite an den axial beweglichen Zwischenring 15, wobei sich das Lamellenpaket 16 wiederum am Lamellenträger 12 abstützt.

Im ersten Gang ist das Lamellenpaket 9 der ersten Lamellenkupplung 3 durch den Federspeicher 10 zusammengepresst. Dadurch wird das Hohlrad 11 mit dem drehfest verbundenen Lamellenträger 12 über einen weiteren Lamellenträger 13 mit dem Gehäuse 1 verbunden. Der Stufenkolben 14 wird mit Hydraulikdruck beaufschlagt und zieht den Zwischenring 15 vom Lamellenpaket 16 und öffnet dieses. Die Eingangsdrehzahl wird vom Sonnerad 8 über das Planetenrad 17 und den Planetensteg 18 mit einer Übersetzung i>1 auf das Planetengetriebe 5 übertragen. Da in diesem Schaltzustand der Lamellenträger 12 drehfest am Gehäuse 1 befestigt ist, gibt es keine Relativdrehzahl zum Stufenkolben 14.

Im zweiten Gang wird der Stufenkolben 19 mit Druck beaufschlagt und löst die drehfeste Verbindung der Lamellenträger 12 und 13. Das Hohlrad 11 kann gegenüber dem Gehäuse 1 frei rotieren. Der Stufenkolben 14 ist dagegen drucklos. Das Federpaket 20 wirkt auf das Lamellenpaket 16, welches das Sonnenrad 8 und über den Lamellenträger 12 das Hohlrad 11 drehfest miteinander verbindet. Die zur Verpressung des Lamellenpakets 16 der zweiten Lamellenkupplung 4 notwendigen Federkräfte und deren Gegenkräfte stützen sich innerhalb des Lamellenträgers 12 ab. In diesem Schaltzustand ist über die Verbindung von Sonnenrad 8 und Hohlrad 11 die Planetenstufe 2 in sich blockiert und leitet die Eingangsdrehzahl mit der Übersetzung i=1 an die Planetenstufe 5 weiter. Zwischen Stufenkolben 14 und Druckring 15 liegt eine Differenzdrehzahl in der Größe der Drehzahl des Sonnerades 8 vor. Es gibt jedoch keine Übertragung von Axialkräften an dieser Stelle. Somit kommt es zu Verlusten aufgrund von Reibung und eine hierdurch verursachte Wärmeentwicklung lediglich kurzeitig während des Schaltens der Kontaktstelle 21 zwischen dem Stufenkolben 14 und dem Zwischenring 15.

Da insoweit die Axialkraft hier innerhalb der drehenden Teile der zweiten Lamellenkupplung erzeugt wird, ist die hydraulisch angesteuerte Betätigung die zum Gehäuse 1 drehfest angeordnet ist, bei eingeschalteter Lamellenkupplung 4 lastlos. Bei Druckbeaufschlagung der Betätigungseinrichtung wird die zweite Lamellenkupplung 4 gelüftet und die zur Betätigung gehörenden Bauteile zum Stillstand gebracht. Drucklager im Bereich der Lamellenkupplungsbetätigung können somit gänzlich entfallen, wodurch weniger Wärme im Getriebe erzeugt wird, was wiederum dessen Lebensdauer und Wirkungsgrad erhöht.

### Bezugszeichenliste

- **1**: Gehäuse
- **1a**: Nabengehäuse
- **2**: Planetenstufe
- **3**: erste Lamellenkupplung
- **4**: zweite Lamellenkupplung
- **5**: Planetenstufe
- **5a**: Planetenstufe
- **6**: Kegelrollenlagerung
- **7**: Hydromotor
- **8**: Sonnenrad
- **9**: Lamellenpaket
- **10**: Federspeicher
- **11**: Hohlrad
- **12**: Lamellenträger
- **13**: Lamellenträger
- **14**: Stufenkolben
- **15**: Zwischenring
- **16**: Lamellenpaket
- **17**: Planetenrad
- **18**: Planetensteg
- **19**: Stufenkolben

## Patentansprüche

1. Schaltbarer hydrostatischer Kompaktantrieb mit mindestens einer Planetenstufe (2), bei der eine erste schaltbare Lamellenkupplung (3) ein Hohlrad (11) drehfest mit einem Gehäuse (1) verbindet, und bei der eine zweite schaltbare Lamellenkupplung (4) das Sonnenrad der Planetenstufe (2) mit dem Hohlrad (11) drehfest verbindet, wobei das Sonnenrad (8) der Planetenstufe (2) durch einen Hydromotor angetrieben ist; und ein Planetensteg (18) der Planetenstufe (2) als Abtrieb vorgesehen ist,
**dadurch gekennzeichnet, dass** zum Einsatz als Fahrantrieb oder Windenantrieb das außen angeordnete ortsfeste Gehäuse (1) mit einem diesem gegenüber drehbar angeordneten und als Abtrieb dienenden Nabengehäuse (1a) versehen ist, indem eine zwischen dem Gehäuse (1) und einem Nabengehäuse (1a) angeordnete Kegelrollenlagerung die von außen auf das Getriebe einwirkende Kräfte aufnimmt und dass im Innenbereich des Gehäuses (1) ein ringförmiger Lamellenträger (12) radial außenseitig die Innenlamellen der ersten Lamellenkupplung (3) und radial innenseitig gegenüberliegend die Außenlamellen der zweiten Lamellenkupplung (4) sowie einen axial daneben angeordneten und in Axialrichtung am Lamellenträger (12) wirkenden Federspeicher (20) zum Schließen der zweiten Lamellenkupplung (4) aufnimmt, wobei sich die Axialkraft des Federspeichers (20) bei geschlossener zweiter Lamellenkupplung (4) auf einer Seite an diesem Lamellenträger (12) abstützt, wobei sich ferner das Lamellenpaket (16) wiederum am Lamellenträger (12) abstützt, um Reibung und damit verbundene Wärmeentwicklung an der Kontaktstelle (21) am Zwischenring (15) zu vermeiden.

2. Schaltbarer hydrostatischer Kompaktantrieb nach Anspruch 1,
**dadurch gekennzeichnet, dass** der Zwischenring (15) über eine Gleitlagerung mit einem hydraulisch betätigten Stufenkolben (14) zum Lüften der Lamellenkupplung (4) gegen die Axialkraft des Federspeichers (20) verbunden ist.

3. Schaltbarer hydrostatischer Kompaktantrieb nach Anspruch 1,
**dadurch gekennzeichnet, dass** der Zwischenring (15) über eine Wälzlagerung mit einem hydraulisch betätigten Stufenkolben (14) zum Lüften der Lamellenkupplung (4) gegen die Axialkraft des Federspeichers (20) verbunden ist.

4. Schaltbarer hydrostatischer Kompaktantrieb nach einem der Ansprüche 1 bis 3,
**dadurch gekennzeichnet, dass** der Lamellenträger (12) der zweiten Lamellenkupplung (4) über eine Koppelverzahnung drehfest mit dem Hohlrad (11) verbunden ist.

5. Schaltbarer hydrostatischer Kompaktantrieb nach einem der Ansprüche 1 bis 4,
**dadurch gekennzeichnet, dass** das Sonnenrad (8) der Planetenstufe (2) über eine Steckverzahnung direkt und koaxial mit dem Hydromotor (7) verbunden ist, wobei eine weitere Mitnehmeverzahnung im Bereich des Sonnenrades direkt mit den Innenlamellen der zweiten Lamellenkupplung (4) zwischen Sonnenrad (8) und Hohlrad (11) verbunden ist.

6. Schaltbarer hydrostatischer Kompaktantrieb nach einem der vorstehenden Ansprüche,
**dadurch gekennzeichnet, dass** dem Planetensteg (18) der Planetenstufe (2) mindestens eine weitere Planetenstufe (5, 5a) zur Untersetzung der Getriebedrehzahl nachgeschaltet ist.

7. Schaltbarer hydrostatischer Kompaktantrieb nach Anspruch 6,
**dadurch gekennzeichnet, dass** genau zwei weitere Planetenstufen (5.5a) vorgesehen sind, wobei der Antrieb der weiteren Planetenstufen (5, 5a) jeweils über deren Sonnenräder erfolgt.

## Claims

1. A switchable hydrostatic compact drive, comprising at least one planetary stage (2) having a first switchable multi-disc clutch (3) connecting a ring gear (11) with a housing (1) in an anti-twist manner and having a second switchable multi-disc clutch (4) connecting the sun gear of the planetary stage (2) with the ring gear (11) in an anti-twist manner, wherein the sun gear (8) of the planetary stage (2) is driven by a hydraulic motor, and a planet spider (18) of the planetary stage (2) is provided as an output,
**characterized in that,** for use as a vehicle drive or winch drive, the stationary housing (1), arranged on the outside, is provided with a hub housing (1 a) rotatable with respect to the latter and acting as an output, by having a tapered roller bearing arranged between the housing (1) and the hub housing (1a) receive the forces acting on the transmission from the outside, and **in that**, in the interior of the housing (1), an annular disc carrier (12) carries the inner discs of the first multi-disc clutch (3) radially on the outside and, opposite from these, the outer discs of the second multi-disc clutch (4) radially on the inside, and a biasing spring (20), arranged axially adjacent and acting on the disc carrier (12) in the axial direction, for closing the second multi-disc clutch (4), wherein the axial force of the biasing spring (20), when the second multi-disc clutch (4) is closed, is supported on one side on this disc carrier (12), wherein furthermore the disc set (16), in turn, is supported on the disc carrier (12) to avoid friction and the associated heat generation at the contacting position (21) on the intermediate ring (15).

2. The switchable hydrostatic compact drive according to claim 1,
**characterized in that** the intermediate ring (15) is connected with a hydraulically actuated stepped piston (14) for releasing the multi-disc clutch (4) against the axial force of the biasing spring (20) via a journal bearing.

3. The switchable hydrostatic compact drive according to claim 1,
**characterized in that** the intermediate ring (15) is connected with a hydrostatically actuated stepped piston (14) for releasing the multi-disc clutch (4) against the axial force of the biasing spring (20) via a roller bearing.

4. The switchable hydrostatic compact drive according to any one of claims 1 to 3,
**characterized in that** the disc carrier (12) of the second multi-disc clutch (4) is connected to the ring gear (11) via a coupling toothing in an anti-twist manner.

5. The switchable hydrostatic compact drive according to any one of claims 1 to 4,
**characterized in that** the sun gear (8) of the planetary stage (2) is directly and coaxially connected with the hydraulic motor (7) via a slot-in toothing, wherein a further drive toothing in the area of the sun gear is directly connected with the inner discs of the second multi-disc clutch (4) between the sun gear (8) and the ring gear (11).

6. The switchable hydrostatic compact drive according to any one of the preceding claims,
**characterized in that** at least one further planetary stage (5, 5a) for reducing the transmission speed is downstream of the planet spider (18) of the planetary stage (2).

7. The switchable hydrostatic compact drive according to claim 6,
**characterized in that** precisely two further planetary stages (5, 5a) are provided, wherein the further planetary stages (5, 5a) are each driven via their sun gears.

## Revendications

1. Entraînement compact hydrostatique commutable comprenant au moins un étage planétaire (2) dans lequel un premier accouplement à lamelles commutable (3) relie une roue creuse (11) solidairement en rotation à un boîtier (1), et dans lequel un second accouplement à lamelles commutable (4) relie la roue solaire de l'étage planétaire (2) solidairement en rotation à la roue creuse (11), dans lequel la roue solaire (8) de l'étage planétaire (2) est entraînée par un moteur hydraulique, et un porte-planétaires (18) de l'étage planétaire (2) est prévu à titre d'organe mené,
**caractérisé en ce que**, pour l'utilisation à titre d'entraînement de déplacement ou d'entraînement de treuil, le boîtier stationnaire (1) agencé à l'extérieur est pourvu d'un boîtier de moyeu (1a) agencé en rotation par rapport au boîtier stationnaire (1) et servant d'organe mené, dans lequel un palier à rouleaux coniques agencé entre le boîtier (1) et le boîtier de moyeu (1a) encaisse les forces agissant depuis l'extérieur sur la transmission, et **en ce que** dans la zone intérieure du boîtier (1) un porte-lamelles de forme annulaire (12) reçoit radialement du côté extérieur les lamelles intérieures du premier accouplement à lamelles (3) et, radialement à l'intérieur et à l'opposé des lamelles extérieures, il reçoit les lamelles extérieures du second accouplement à lamelles (4) ainsi qu'un accumulateur à ressort (20) agencé axialement à côté de celui-ci et agissant en direction axiale sur le porte-lamelles (12), pour la fermeture du second accouplement à lamelles (4), la force axiale de l'accumulateur à ressort (20) étant soutenue, lorsque le second accouplement à lamelles (4) est fermé, sur un côté sur ce porte-lamelles (12), et le paquet de lamelles (16) est soutenu à son tour sur le porte-lamelles (12) pour éviter une friction et un dégagement de chaleur en liaison avec celle-ci au niveau de l'emplacement de contact (21) sur une bague intermédiaire (15).

2. Entraînement compact hydrostatique commutable selon la revendication 1,
**caractérisé en ce que** la bague intermédiaire (15) est reliée via un palier coulissant à un piston en gradins (14) actionné par voie hydraulique pour ouvrir l'accouplement à lamelles (4) à l'encontre de la force axiale de l'accumulateur à ressort (20).

3. Entraînement compact hydrostatique commutable selon la revendication 1,
**caractérisé en ce que** la bague intermédiaire (15) est reliée via un palier à roulements à un piston en gradins (14) actionné par voie hydraulique pour ouvrir l'accouplement à lamelles (4) à l'encontre de la force axiale de l'accumulateur à ressort.

4. Entraînement compact hydrostatique commutable selon l'une des revendications 1 à 3,
**caractérisé en ce que** le porte-lamelles (12) du second accouplement à lamelles (4) est relié solidairement en rotation à la roue creuse (11) via une denture d'accouplement.

5. Entraînement compact hydrostatique commutable selon l'une des revendications 11 4,
**caractérisé en ce que** la roue solaire (8) de l'étage planétaire (2) est reliée directement et coaxialement au moteur hydraulique (7) via une denture enfichable, et une autre denture d'entraînement dans la zone de la roue solaire est reliée directement aux lamelles intérieures du second accouplement à lamelles (4) entre la roue solaire (8) et la roue creuse (11).

6. Entraînement compact hydrostatique commutable selon l'une des revendications précédentes, **caractérisé en ce qu'**au moins un autre étage planétaire (5, 5a) est prévu à la suite du porte-planétaire (18) de l'étage planétaire (2) pour la démultiplication de la vitesse de transmission.

7. Entraînement compact hydrostatique commutable selon la revendication 6,
**caractérisé en ce qu'**il est prévu exactement deux étages planétaires (5, 5a), l'entraînement des autres étages planétaires (5, 5a) ayant lieu respectivement via leurs roues solaires.
